# DEMANDE DE BREVET EUROPEEN

(11) **EP 4 631 797 A1**
(43) Date de publication de la demande: **15.10.2025**
(21) Numéro de dépôt: 25167917.1
(22) Date de dépôt: 02.04.2025
(51) Int. Cl.: B60R 21/215

(54) **ENSEMBLE DE MECANISME D'AIRBAG COMBINANT UN VOLET ET SA CHARNIERE AVEC AU MOINS UNE PORTION DE CADRE D'ORIFICE DE CANAL**

(30) Priorité: 10.04.2024 FR 2403667
(71) Demandeur: SMRC Automotive Holdings Netherlands B.V., 1101 BA Amsterdam (NL)
(72) Inventeur: AUTEM, Laurent, 62860 SAINS-LES-MARQUION (FR); FORGERON, Jérôme, 62220 CARVIN (FR); SABOT, Ludovic, 59000 LILLE (FR)
(74) Mandataire: Ipsilon

(57) **Abrégé**

Ensemble de mécanisme d'airbag combinant un volet et sa charnière avec au moins une portion de cadre de l'orifice de canal.

L'invention porte sur un ensemble comprenant un volet (1) et au moins une portion de cadre (2) de l'orifice de canal (3) d'airbag reliés entre eux par une charnière (4) de jonction caractérisé en ce que, dans une position de fermeture du volet (1), la surface supérieure (41) de la charnière (4) est positionnée au-dessus de la surface supérieure (21) de la portion du cadre (2) de l'orifice de canal (3) d'airbag à proximité de sa jonction (24) avec la charnière (4), de sorte que le cadre (2) qui entoure l'orifice du canal (3) d'airbag et la charnière (4) associée au volet (1) sont positionnés à des niveaux différents d'un axe virtuel disposé de façon sensiblement perpendiculaire au plan de la surface du volet (1) et/ou de la charnière (4) en position de fermeture et/ou de la surface périphérique à l'orifice du canal (3) d'airbag.

## Description

La présente invention concerne le domaine des cadres d'orifice de canal d'airbag de véhicule recouverts par un revêtement, et plus précisément le domaine des mécanismes de charnière entre un volet et le cadre d'un tel canal d'airbag.

Lors de réalisation d'habitacles de véhicule, il est possible d'opérer le positionnement d'un revêtement directement contre la surface de la structure rigide qui intègre, voire forme, les volets des mécanismes d'airbag. Dans le cadre d'une amélioration de l'aspect de cet habitacle, tant dans la perception tactile que visuelle de la surface de l'habitacle, la surface de la structure rigide de l'habitacle est recouverte d'un revêtement moussé positionné entre la structure rigide formant un support et le revêtement de surface. Le revêtement moussé forme ainsi une épaisseur intermédiaire susceptible d'épouser et de s'adapter aux légères variations de surface de la structure rigide en conférant une homogénéisation visuelle du rendu de la surface extérieure visible depuis l'habitacle du véhicule. Surtout, l'épaisseur intermédiaire moussée apporte une certaine souplesse au toucher de la surface de l'habitacle.

Il a toutefois été constaté que, dans le cadre du déploiement d'un coussin d'airbag, le revêtement moussé est susceptible de faire obstacle à l'ouverture des volets du mécanisme d'airbag. En raison du volume qu'occupe l'épaisseur du revêtement moussé sur la surface de la structure rigide de l'habitacle, celui-ci tend à s'opposer à l'ouverture des volets du mécanisme d'airbag. La présence d'un revêtement conduit ainsi à freiner l'ouverture des volets mais également à limiter l'amplitude de cette ouverture. En effet, lors de l'ouverture d'un volet, l'épaisseur du revêtement moussé positionné au niveau de la charnière est conduit à être compressée entre, d'une part, la surface périphérique de canal d'airbag et, d'autre part, la surface supérieure du volet en pivotement. La présence d'un revêtement moussé sur la surface de la structure rigide est ainsi susceptible d'altérer la cinématique d'un déploiement efficace du coussin d'airbag hors du canal d'éjection, de sorte que la sécurité du passager du véhicule s'en trouve dégradée. De façon plus problématique encore, en cas de déploiement à froid de l'airbag, le volet contraint entre des forces antagonistes formées par le coussin d'airbag en déploiement et le revêtement moussé qui s'oppose au pivotement du volet, est susceptible de connaître une casse ou une rupture au niveau d'une zone de fragilité. Lorsqu'une telle casse survient au niveau de la charnière qui relie le volet au reste de la structure du canal d'airbag, le volet présente alors un risque de détachement et donc d'être à l'origine de blessures d'un passager présent dans l'habitacle.

La présente invention a pour but de pallier ces inconvénients en proposant une solution qui permet de conserver le recouvrement de la surface structurelle d'un volet d'airbag et de son cadre associé par un revêtement moussé d'homogénéisation de cette surface, tout en limitant l'impact d'un tel type de revêtement sur la qualité de déploiement du coussin d'airbag, tant dans son amplitude que dans sa vitesse d'éjection.

L'invention concerne un ensemble comprenant un volet et au moins une portion de cadre de l'orifice de canal d'airbag reliés entre eux par une charnière de jonction caractérisé en ce que, dans une position de fermeture du volet, la surface supérieure de la charnière est positionnée au-dessus de la surface supérieure de la portion du cadre de l'orifice de canal d'airbag à proximité de sa jonction avec la charnière, de sorte que le cadre qui entoure l'orifice du canal d'airbag et la charnière associée au volet sont positionnés à des niveaux différents d'un axe virtuel disposé de façon sensiblement perpendiculaire au plan de la surface du volet et/ou de la charnière en position de fermeture et/ou de la surface périphérique à l'orifice du canal d'airbag.

L'invention sera mieux comprise, grâce à la description ci-après, qui se rapporte à des modes de réalisation préférés, donnés à titre d'exemple non limitatif, et expliqués avec référence aux dessins schématiques annexés, dans lesquels :

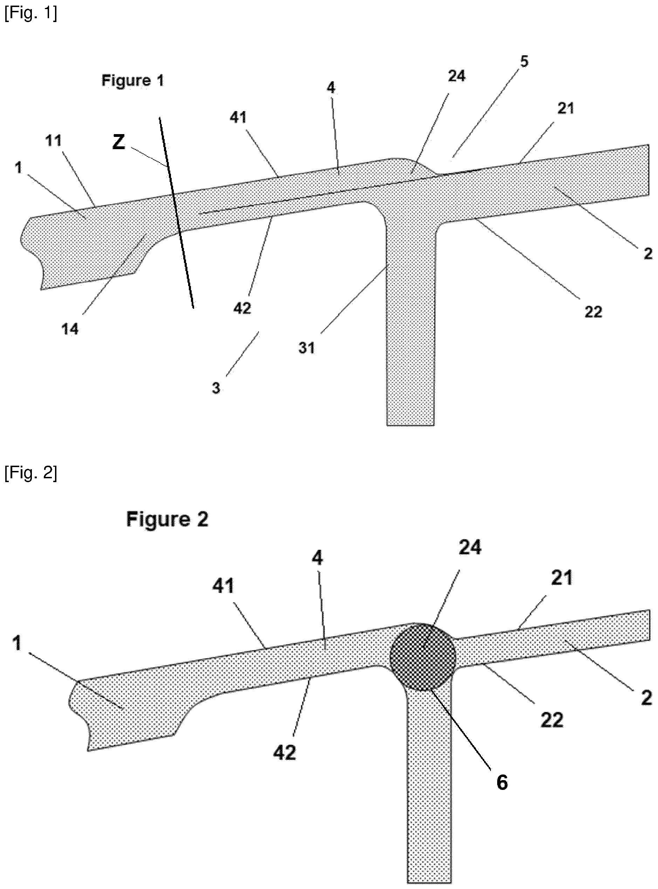

[Fig. 1] représente une illustration schématique d'un exemple d'ensemble selon l'invention,
[Fig. 2] représente une illustration schématique d'un exemple d'ensemble selon l'invention dans laquelle un exemple de cercle inscrit de volume matière nécessaire à la jonction de la charnière au cadre se trouve matérialisé.

Dans le présent document, la caractérisation des positions relatives des différents éléments entre eux fait intervenir les termes « dessus/dessous » et/ou « supérieur/inférieur ». Ces différentes notions sont à considérer par rapport à une position sur un axe virtuel Z disposé de façon sensiblement perpendiculaire au plan de la surface de la structure rigide, c'est-à-dire au plan de la surface du volet 2 en position de fermeture et/ou de la surface périphérique à l'orifice du canal 3 d'airbag formant au moins pour partie la surface du cadre 2 qui entoure l'orifice du canal 3 d'airbag. Le long de cet axe virtuel Z, les surfaces et éléments orientés, voire destinés à être orientés ou positionnés, du côté de l'habitacle sont alors caractérisés comme étant « au-dessus » ou « supérieurs » par rapport à des surfaces et éléments orientés ou positionnés, voire destinés à être orientés ou positionnés, du côté de l'habitacle qui eux sont caractérisés comme étant « au-dessous » ou « inférieurs ».

L'invention porte sur un ensemble comprenant un volet 1 et au moins une portion de cadre 2 de l'orifice de canal 3 d'airbag reliés entre eux par une charnière 4 de jonction caractérisé en ce que, dans une position de fermeture du volet 1, la surface supérieure 41 de la charnière 4 est positionnée au-dessus de la surface supérieure 21 de la portion du cadre 2 de l'orifice de canal 3 d'airbag à proximité de sa jonction 24 avec la charnière 4, de sorte que le cadre 2 qui entoure l'orifice du canal 3 d'airbag et la charnière 4 associée au volet 1 sont positionnés à des niveaux différents d'un axe virtuel disposé de façon sensiblement perpendiculaire au plan de la surface du volet 1 et/ou de la charnière 4 en position de fermeture et/ou de la surface périphérique à l'orifice du canal 3 d'airbag. Aussi, dans l'ensemble selon l'invention, le cadre 2 qui entoure l'orifice du canal 3 d'airbag et la charnière 4 associée au volet 1 sont positionnés à des niveaux différents d'un axe virtuel disposé de façon sensiblement perpendiculaire au plan de la surface de la structure rigide, c'est-à-dire au plan de la surface du volet 1 et de la charnière 4 en position de fermeture et/ou de la surface périphérique à l'orifice du canal 3 d'airbag. Cette différence de niveau et/ou de hauteur avec un positionnement plus bas de la surface supérieure 21 du cadre 2 qui entoure l'orifice du canal 3 d'airbag à proximité de sa jonction 24 avec la charnière 4 par rapport à la surface supérieure 41 de la charnière 4 du volet 1, forme un espace ou dégagement en vis-à-vis de la surface supérieure 21 du cadre 2 à proximité de sa jonction 24 avec la charnière 4, au-dessus du niveau de la jonction 24 de la charnière 4 au cadre 2. Aussi, lorsque les surfaces supérieures 11, 21, 41 respectives du volet 1, de la portion du cadre 2 de l'orifice de canal 3 d'airbag et de la charnière 4 sont recouvertes par une épaisseur de revêtement moussé, ce revêtement moussé est conduit à supporter une compression lors du pivotement du volet 1 autour de l'axe de la charnière 4. Grâce à la différence de niveau entre, d'une part, la surface supérieure 41 de la charnière 4 et, d'autre part, la surface supérieure 21 de la portion du cadre 2 de l'orifice de canal 3 d'airbag, l'espace ou le dégagement réalisé en vis-à-vis de la surface supérieure 21 du cadre 2 à proximité de sa jonction 24 avec la charnière 4, au-dessus du niveau de la jonction 24 de la charnière 4 au cadre 2 est ainsi en mesure de recevoir une compression du revêtement moussé sans que celui-ci n'affecte de façon significative le pivotement du volet 1 par rapport au cadre 2 de l'orifice de canal 3 d'airbag et son amplitude de pivotement. L'espace ou dégagement formé par la différence de niveaux ou de hauteur des surfaces 21, 41 respectives de la charnière 4 et du cadre 2 de part et d'autre de leur jonction 24 se traduit également par un relief formant un bossage que réalise la surface supérieure 41 de la charnière 4 par rapport à la surface supérieure 21 du cadre 2 à proximité de sa jonction 24 avec la charnière 4.

Il convient de relever que, bien que le revêtement moussé soit réalisé dans un matériau qui présente une certaine élasticité, la déformation de ce revêtement notamment en compression comprend une limite couplée à un effort de réaction qui correspond à un retour à sa forme originale. Cet effort de réaction du revêtement moussé s'oppose ainsi à sa déformation et donc, en étant positionné contre la surface de la structure rigide, réalise un effort antagoniste à la déformation de la surface de la structure rigide. Aussi, dans le cadre d'une construction présentant un positionnement des surfaces supérieures 11, 41 du volet 1 et de la charnière 4 à un niveau identique ou similaire à celui de la surface supérieure 21 de la portion du cadre 2, la compression du revêtement moussé s'opère dans une zone positionnée au-dessus et en vis-à-vis de la surface supérieure 41 de la charnière 4, c'est-à-dire au-dessus du niveau des surfaces 11, 41, 21 du volet 1, de la charnière 4 et de la portion du cadre 2. Cette compression se réalise ainsi sur l'ensemble de la portion de revêtement moussé positionnée en vis-à-vis de la charnière 4, de sorte que ce revêtement moussé en compression fait obstacle à une déformation efficace de la charnière 4 et s'oppose à un déplacement du volet 1 vers le haut autour de la charnière 4 en affectant la qualité de son pivotement. A l'inverse, dans le cadre d'un ensemble selon l'invention, la différence des niveaux de part et d'autre de la jonction 24 de la charnière 4 avec la surface supérieure 21 de la portion du cadre 2 à proximité de cette jonction 24, conduit le revêtement moussé à supporter une compression, d'une part, à un niveau inférieur à la surface supérieure 41 de la charnière 4 et, d'autre part, en vis-à-vis de la surface supérieure 21 du cadre 2 à proximité de sa jonction 24 avec la charnière 4. Ce décalage de niveau de la zone de compression du revêtement moussé permet ainsi de limiter, voire de supprimer un obstacle au déplacement du volet 1 vers le haut tout en pivotant autour de la charnière 4. De même, ce décalage de niveau écarte la zone de compression du revêtement moussé d'une zone en vis-à-vis de la surface supérieure 11 du volet 1 et plus particulièrement d'une zone en vis-à-vis de la surface supérieure 41 de la charnière 4 pour déplacer cette zone de compression au-dessus et/ou en vis-à-vis de la surface supérieure 21 du cadre 2 à proximité de sa jonction 24 avec la charnière 4, c'est-à-dire en vis-à-vis d'une portion du cadre 2 de l'orifice du canal 3 d'airbag. La surface supérieure 11 du volet 1 et notamment la surface supérieure 41 de la charnière 4 se trouvent ainsi dégagées de l'obstacle que réalise la compression du revêtement moussé lors du pivotement du volet 1.

Selon un exemple se rapportant à une variante de construction de l'ensemble selon l'invention, dans une position de fermeture du volet 1, la différence de niveau entre, d'une part, la surface supérieure 41 de la charnière 4 au niveau de sa jonction 14 avec le volet 1 et, d'autre part, la surface supérieure 21 de la portion du cadre 2 de l'orifice de canal 3 d'airbag à sa jonction avec la charnière 4 est supérieure ou égale à la moitié de l'épaisseur de la charnière 4. Une telle différence de niveau permet la réalisation d'un espace et/ou dégagement en vis-à-vis de la surface supérieure 21 du cadre 2 à proximité de sa jonction 24 avec la charnière 4 et d'un bossage au niveau de la surface supérieure 41 de la charnière 4 qui sont proportionnés à la flexibilité de la charnière 4 pour le pivotement du volet 1. En effet, une réduction de l'épaisseur de la charnière 4 augmente sa flexibilité et donc diminue sa résistance à la force de réaction générée par la compression du revêtement moussé. Aussi, l'épaisseur de la charnière 4 conditionne sa propension à déformer le revêtement moussé sans être elle-même déformée par le revêtement moussé. Le conditionnement de l'importance du bossage réalisé par la surface supérieure 41 de la charnière 4 ou de l'importance du dégagement par la surface supérieure 21 du cadre 2 à une valeur plancher définie par l'épaisseur de la charnière 4, permet ainsi d'assurer un positionnement de la compression du revêtement moussé en vis-à-vis de la surface supérieure 21 du cadre 2 à proximité de sa jonction 24 avec la charnière 4 de sorte que la déformation de la charnière 4 lors du déploiement du coussin d'airbag ne soit pas altérée par la compression du revêtement moussé.

Selon un exemple se rapportant à une autre variante de construction de l'ensemble selon l'invention susceptible d'être combinée avec l'une ou l'autre des variantes de construction précédemment détaillées, dans un plan en section perpendiculaire à l'axe de pivotement de la charnière 4, dans une position de fermeture du volet 1, la surface supérieure 41 de la charnière 4 et la surface inférieure 42 de la charnière 4 comprennent respectivement, à proximité de la jonction 24 avec le cadre 2 de l'orifice de canal 3 d'airbag, au moins une portion qui présente un rayon de courbure. Une telle construction permet d'opérer une amélioration de la jonction de la charnière 4 au cadre 2 de l'orifice de canal 3 d'airbag notamment en améliorant la résistance de cette jonction à la déformation. De façon préférée, les rayons de courbures des portions des surfaces, supérieure 41 et inférieure 42, de la charnière 4 à proximité de la jonction 24 avec le cadre 2 de l'orifice de canal 3 d'airbag sont configurés pour opérer une jonction entre deux plans. A titre d'exemple, par leurs bords respectifs les plus proches de la jonction 24 avec le cadre 2 de l'orifice de canal 3 d'airbag, les portions des surfaces 41, 42 de la charnière 4 qui présentent un rayon de courbure sont sensiblement continues, c'est-à-dire sans présence d'arête, avec le plan principal de la charnière 4 dans une position d'ouverture du volet 1. De même, par leurs bords opposés, les portions courbées des surfaces 41, 42 de la charnière 4 sont sensiblement continues avec le plan principal de la charnière 4 dans une position de fermeture du volet 1.

Selon un exemple se rapportant à une variante de construction spécifique de la variante précédemment détaillée, le rayon de courbure de la surface supérieure 41 de la charnière 4 est supérieur ou égal au rayon de courbure de la surface inférieure 42 de la charnière 4. Selon cette variante de construction spécifique, l'épaisseur de la charnière 4 entre la surface supérieure 41 et la surface inférieure 42 de cette portion courbée, augmente à proximité de la jonction 24 de la charnière 4 avec le cadre 2 de l'orifice de canal 3 d'airbag. Cette variation de l'épaisseur de la charnière 4 permet de renforcer sa structure au niveau de sa connexion avec le cadre 2 de l'orifice de canal 3 d'airbag, c'est-à-dire au niveau de sa portion d'extrémité qui supporte l'amplitude de déformation la plus importante ou susceptible d'être la plus importante. Cette variation de l'épaisseur de la charnière 4 à proximité de la jonction 24 de la charnière 4 avec le cadre 2 de l'orifice de canal 3 d'airbag permet ainsi de limiter, voire empêcher, les risques de rupture de la jonction du volet 1 au cadre 2 de l'orifice de canal 3.

Selon un exemple se rapportant à une variante de construction spécifique de la variante précédente et susceptible d'être combinée avec la variante précédemment détaillée, d'une part, la courbure de la surface supérieure 41 de la charnière 4 est convexe au niveau de la portion présentant un rayon de courbure et, d'autre part, la courbure de la surface inférieure 42 de la charnière 4 est concave au niveau de la portion présentant un rayon de courbure. Selon cet exemple de construction, la convexité de la surface supérieure 41 de la charnière 4 participe à la réalisation du bossage au niveau de la jonction 24 de la charnière 4 au cadre 2 de l'orifice de canal 3 d'airbag. La concavité de la courbure de la surface inférieure 42 de la charnière 4 réalise une forme sensiblement complémentaire à la surface supérieure 41 de la charnière 4 de sorte que l'épaisseur de la charnière 4 soit sensiblement homogène ou présente une variation sensiblement homogène.

Selon un exemple se rapportant à une autre variante de construction de l'ensemble selon l'invention susceptible d'être combinée avec l'une ou l'autre des variantes de construction précédemment détaillées, dans un plan en section perpendiculaire à l'axe de pivotement de la charnière 4, dans une position de fermeture du volet 1, les surfaces, supérieure et inférieure, de la jonction 24 de la surface de la portion du cadre 2 de l'orifice du canal 3 d'airbag avec la charnière 4 comprennent respectivement au moins une portion qui présente un rayon de courbure. Dans le cadre d'un tel exemple de construction, une telle portion courbée permet la réalisation d'une continuité de surface, sans arête, entre la surface supérieure 41 de la charnière 4 et la surface supérieure 21 du cadre 2 de l'orifice du canal 3 d'airbag. De même, une portion courbée permet d'obtenir une continuité de surface sur la face inférieure de l'ensemble, notamment, entre la surface inférieure 42 de la charnière 4 et la surface périphérique du conduit formant le canal 3 d'airbag.

Selon un exemple se rapportant à une autre variante de construction de l'ensemble selon l'invention susceptible d'être combinée avec l'une ou l'autre des variantes de construction précédemment détaillées, dans un plan en section perpendiculaire à l'axe de pivotement de la charnière 4, la charnière 4 comprend au moins un volume de matière disposé à l'intérieur d'un cercle 6 inscrit entre, d'une part, la surface supérieure 41 de la charnière 4 à proximité de la jonction 24 au cadre 2 de l'orifice du canal 3 d'airbag, d'autre part, la surface inférieure 42 de la charnière 4 à proximité de la jonction 24 au cadre 2 de l'orifice du canal 3 d'airbag et, encore d'autre part, la surface inférieure 22 de la jonction de la portion du cadre 2 de l'orifice de canal 3 d'airbag avec la surface périphérique du conduit formant le canal 3 d'airbag. Un cercle 6 inscrit passant par ces différents points impose un volume de matière minimal qui confère à la jonction 24 de la charnière 4 au cadre 2 de l'orifice du canal 3 d'airbag, d'une part, une solidité et un ancrage suffisants du volet 1 pour résister au déploiement du coussin d'airbag couplé à une souplesse suffisante de la charnière 4 tout en permettant le pivotement du volet 1 et, d'autre part, la réalisation d'un bossage par la différence de niveau entre la surface supérieure 41 de la charnière 4 et la surface supérieure 21 de la portion du cadre 2 de l'orifice à proximité de sa jonction 24 avec la charnière 4, c'est-à-dire la réalisation d'un dégagement pour une compression du revêtement moussé lors du pivotement du volet 1 avec la charnière 4.

Selon un exemple se rapportant à une autre variante de construction de l'ensemble selon l'invention susceptible d'être combinée avec l'une ou l'autre des variantes de construction précédemment détaillées, la surface supérieure 21 d'une portion du cadre 2 de l'orifice de canal 3 d'airbag située à distance de la jonction 24 du cadre 2 avec la charnière 4 est positionnée de niveau ou dans la continuité de la surface supérieure 11 du volet 1, en particulier de niveau ou dans la continuité de la jonction 14 de la surface supérieure 11 du volet 1 avec la charnière 4. Selon cet exemple de construction, la structure rigide de l'habitacle présente un arrangement de surface sensiblement plan ou sensiblement continu de sorte que seule la surface supérieure 21 du cadre 2 de l'orifice de canal 3 d'airbag située à proximité de sa jonction 24 avec la charnière 4 présente un arrangement creux 5. Cet arrangement creux 5 est formé par la différence de hauteur entre la surface supérieure 41 de la charnière 4 et la surface supérieure 21 du cadre 2 de l'orifice de canal 3 d'airbag. Une des faces de cet arrangement creux 5 est notamment réalisée par le bossage que forme la surface supérieure 41 de la jonction 24 de la charnière 4 avec la surface supérieure 21 du cadre 2 de l'orifice de canal 3 d'airbag.

Selon un exemple se rapportant à une autre variante de construction de l'ensemble selon l'invention susceptible d'être combinée avec l'une ou l'autre des variantes de construction précédemment détaillées, dans un plan en section perpendiculaire à l'axe de pivotement de la charnière 4, la surface supérieure de l'ensemble présente un creux 5 essentiellement disposé à l'intérieur d'un cercle inscrit entre, d'une part, le niveau de la surface supérieure de l'ensemble défini par l'alignement que réalisent la surface supérieure 41 de la charnière 4 et la surface supérieure 21 d'une portion du cadre 2 de l'orifice de canal 3 d'airbag située à distance de sa jonction 24 avec la charnière 4, d'autre part, la surface inférieure 22 de la portion du cadre 2 de l'orifice de canal 3 d'airbag au plus proche de la jonction 24 de la surface supérieure 21 du cadre 2 avec la charnière 4 et, encore d'autre part, la surface inférieure 42 de la charnière 4. Le positionnement de cet arrangement creux 5 de la surface supérieure de l'ensemble à l'intérieur d'un cercle inscrit spécifique permet de restreindre le défaut de continuité de la surface supérieure de l'ensemble à une zone spécifique à proximité de la jonction de la charnière 4 au cadre 2 de l'orifice de canal 3 d'airbag. Le positionnement de l'arrangement creux 5 à l'intérieur du cercle inscrit tel que défini précédemment permet également de restreindre cet arrangement creux 5 à la seule zone nécessaire pour la compression d'un revêtement moussé lors du pivotement de la charnière 4 et du volet 1 associé. De même, la restriction de cet arrangement creux 5 à un cercle inscrit spécifique permet de limiter de façon contrôlée la perte de solidité ou de résistance à la rupture de l'ensemble de l'invention due à une absence de matière.

Selon un exemple se rapportant à une variante de construction formant une alternative à la variante de construction précédemment détaillée, dans un plan en section perpendiculaire à l'axe de pivotement de la charnière 4, la surface supérieure de l'ensemble présente un creux 5 essentiellement disposé à l'intérieur d'un cercle inscrit entre, d'une part, le niveau de la surface supérieure de l'ensemble défini par l'alignement que réalisent la surface supérieure 41 de la charnière 4 et la surface supérieure 21 d'une portion du cadre 2 de l'orifice de canal 3 d'airbag située à distance de sa jonction 24 avec la charnière 4, d'autre part, la surface inférieure 22 de la portion du cadre 2 de l'orifice de canal 3 d'airbag au plus proche de la jonction 24 de la surface supérieure 21 du cadre 2 avec la charnière 4 et, encore d'autre part, la surface intérieure 31 de la partie supérieure du canal 3 d'airbag sous le volet 1 en position de fermeture. Cette variante alternative s'applique notamment lorsque, d'une part, la surface inférieure 42 de la charnière 4 et, d'autre part, la surface inférieure 22 de la portion du cadre 2 de l'orifice de canal 3 d'airbag au plus proche de la jonction de la surface supérieure 21 du cadre 2 avec la charnière 4 sont positionnées à des niveaux différents. Un exemple de ce cas de figure est susceptible de survenir lorsque, d'une part, la surface inférieure 42 de la charnière 4 présente une continuité de surface avec la surface intérieure 31 de la partie supérieure du canal 3 d'airbag et que, d'autre part, l'épaisseur du cadre 2 de l'orifice de canal 3 d'airbag est importante à sa jonction contre la surface périphérique du canal 3 d'airbag de sorte que la surface inférieure 22 de la portion du cadre 2 la plus proche de la jonction 24 de la surface supérieure 21 du cadre 2 avec la charnière 4 se trouve écartée de cette jonction 24. Aussi, lorsqu'une différence de hauteur existe entre, d'une part, la surface inférieure 42 de la charnière 4 et, d'autre part, la surface inférieure 22 de la portion du cadre 2 de l'orifice de canal 3 d'airbag au plus proche de la jonction de la surface supérieure 21 du cadre 2 avec la charnière 4 et que cette différence de niveau présente un écart trop important pour la réalisation d'un cercle tel que défini au paragraphe précédent, il est nécessaire de redéfinir le cercle inscrit selon les caractéristiques détaillées dans le présent paragraphe. Cette redéfinition permet de conserver les effets et avantages liés à la restriction de l'arrangement creux 5 à un cercle inscrit spécifique.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Ensemble comprenant un volet (1) et au moins une portion de cadre (2) de l'orifice de canal (3) d'airbag reliés entre eux par une charnière (4) de jonction **caractérisé en ce que**, dans une position de fermeture du volet (1), la surface supérieure (41) de la charnière (4) est positionnée au-dessus de la surface supérieure (21) de la portion du cadre (2) de l'orifice de canal (3) d'airbag à proximité de sa jonction (24) avec la charnière (4), de sorte que le cadre (2) qui entoure l'orifice du canal (3) d'airbag et la charnière (4) associée au volet (1) sont positionnés à des niveaux différents d'un axe virtuel disposé de façon sensiblement perpendiculaire au plan de la surface du volet (1) et/ou de la charnière (4) en position de fermeture et/ou de la surface périphérique à l'orifice du canal (3) d'airbag.

2. Ensemble selon la revendication 1, **caractérisé en ce que**, dans une position de fermeture du volet (1), la différence de niveau entre, d'une part, la surface supérieure (41) de la charnière (4) au niveau de sa jonction (14) avec le volet (1) et, d'autre part, la surface supérieure (21) de la portion du cadre (2) de l'orifice de canal (3) d'airbag à sa jonction avec la charnière (4) est supérieure ou égale à la moitié de l'épaisseur de la charnière (4).

3. Ensemble selon une des revendications précédentes, **caractérisé en ce que**, dans un plan en section perpendiculaire à l'axe de pivotement de la charnière (4), dans une position de fermeture du volet (1), la surface supérieure (41) de la charnière (4) et la surface inférieure (42) de la charnière (4) comprennent respectivement, à proximité de la jonction (24) avec le cadre (2) de l'orifice de canal (3) d'airbag, au moins une portion qui présente un rayon de courbure.

4. Ensemble selon la revendication 3, **caractérisé en ce que** le rayon de courbure de la surface supérieure (41) de la charnière (4) est supérieur ou égal au rayon de courbure de la surface inférieure (42) de la charnière (4).

5. Ensemble selon une des revendications 3 ou 4, **caractérisé en ce que**, d'une part, la courbure de la surface supérieure (41) de la charnière (4) est convexe au niveau de la portion présentant un rayon de courbure et, d'autre part, la courbure de la surface inférieure (42) de la charnière (4) est concave au niveau de la portion présentant un rayon de courbure.

6. Ensemble selon une des revendications précédentes, **caractérisé en ce que**, dans un plan en section perpendiculaire à l'axe de pivotement de la charnière (4), dans une position de fermeture du volet (1), les surfaces, supérieure et inférieure, de la jonction (24) de la surface de la portion du cadre (2) de l'orifice du canal (3) d'airbag avec la charnière (4) comprennent respectivement au moins une portion qui présente un rayon de courbure.

7. Ensemble selon une des revendications précédentes, **caractérisé en ce que**, dans un plan en section perpendiculaire à l'axe de pivotement de la charnière (4), la charnière (4) comprend au moins un volume de matière disposé à l'intérieur d'un cercle (6) inscrit entre, d'une part, la surface supérieure (41) de la charnière (4) à proximité de la jonction (24) au cadre (2) de l'orifice du canal (3) d'airbag, d'autre part, la surface inférieure (42) de la charnière (4) à proximité de la jonction (24) au cadre (2) de l'orifice du canal (3) d'airbag et, encore d'autre part, la surface inférieure (22) de la jonction de la portion du cadre (2) de l'orifice du canal (3) d'airbag avec la surface périphérique du conduit formant le canal (3) d'airbag.

8. Ensemble selon une des revendications précédentes, **caractérisé en ce que** la surface supérieure (21) d'une portion du cadre (2) de l'orifice de canal (3) d'airbag située à distance de la jonction (24) du cadre (2) avec la charnière (4) est positionnée de niveau ou dans la continuité de la surface supérieure (11) du volet (1), en particulier de niveau ou dans la continuité de la jonction (14) de la surface supérieure (11) du volet (1) avec la charnière (4).

9. Ensemble combinant au moins les caractéristiques des revendications 6 et 8, **caractérisé en ce que**, dans un plan en section perpendiculaire à l'axe de pivotement de la charnière (4), la surface supérieure de l'ensemble présente un creux (5) essentiellement disposé à l'intérieur d'un cercle inscrit entre, d'une part, le niveau de la surface supérieure de l'ensemble défini par l'alignement que réalisent la surface supérieure (41) de la charnière (4) et la surface supérieure (21) d'une portion du cadre (2) de l'orifice de canal (3) d'airbag située à distance de sa jonction (24) avec la charnière (4), d'autre part, la surface inférieure (22) de la portion du cadre (2) de l'orifice de canal (3) d'airbag au plus proche de la jonction (24) de la surface supérieure (21) du cadre (2) avec la charnière (4) et, encore d'autre part, la surface inférieure (42) de la charnière (4).

10. Ensemble combinant au moins les caractéristiques des revendications 6 et 8, **caractérisé en ce que**, dans un plan en section perpendiculaire à l'axe de pivotement de la charnière (4), la surface supérieure de l'ensemble présente un creux (5) essentiellement disposé à l'intérieur d'un cercle inscrit entre, d'une part, le niveau de la surface supérieure de l'ensemble défini par l'alignement que réalisent la surface supérieure (41) de la charnière (4) et la surface supérieure (21) d'une portion du cadre (2) de l'orifice de canal (3) d'airbag située à distance de sa jonction 24 avec la charnière (4), d'autre part, la surface inférieure (22) de la portion du cadre (2) de l'orifice de canal (3) d'airbag au plus proche de la jonction (24) de la surface supérieure (21) du cadre (2) avec la charnière (4) et, encore d'autre part, la surface intérieure (31) de la partie supérieure du canal (3) d'airbag sous le volet (1) en position de fermeture.
